# FASCICULE DE BREVET EUROPEEN

(11) **EP 1 247 663 B1**
(45) Date de publication et mention de la délivrance du brevet: **10.12.2008**
(21) Numéro de dépôt: 02006337.6
(22) Date de dépôt: 21.03.2002
(51) Int. Cl.: B60G 7/00, B60G 3/20

(54) **Véhicule comportant une suspension à variation de carrossage**
Fahrzeugaufhängung mit Sturzänderung
Vehicle suspension with camber variation

(30) Priorité: 05.04.2001 FR 0104761; 12.12.2001 FR 0116169
(43) Date de publication de la demande: 09.10.2002
(73) Titulaire: Société de Technologie Michelin, 63000 Clermont-Ferrand Cedex 09 (FR); Michelin Recherche et Technique S.A., 1763 Granges-Paccot (CH)
(72) Inventeur: Deal, Michel, 03110 Saint-Remy-En-Rollat (FR)
(74) Mandataire: Le Cam, Véronique Marie Christine

(56) Documents cités:
- DE-A- 3 205 783
- DE-A- 3 900 336
- DE-B- 1 077 538
- FR-A- 2 706 731
- FR-A- 2 721 258

## Description

La présente invention concerne la liaison au sol des véhicules, en particulier les dispositifs de suspension, et plus particulièrement le guidage des roues. Les dispositifs de suspension ont deux fonctions principales qui doivent être assurées simultanément à tout moment lors du fonctionnement. L'une de ces fonctions et celle de suspendre le véhicule, c'est à dire permettre des oscillations sensiblement verticales de chaque roue en fonction de la charge appliquée à cette roue. L'autre fonction de ces dispositifs est celle de guider la roue c'est à dire contrôler la position angulaire du plan de roue.

On appelle "plan de roue" le plan, lié à la roue, qui est perpendiculaire à l'axe de la roue et qui passe par le centre de l'aire de contact avec le sol. La position angulaire du plan de roue par rapport à la caisse du véhicule est définie par deux angles, l'angle de carrossage et l'angle de braquage. L'angle de carrossage d'une roue est l'angle séparant, dans un plan transversal perpendiculaire au sol, le plan de roue du plan médian du véhicule. Cet angle est positif lorsque la partie supérieure de la roue s'écarte du plan médian vers l'extérieur du véhicule, on parle alors couramment de "carrossage" ou de "carrossage positif ". A l'inverse, lorsque cet angle est négatif, on parle de "contre-carrossage" ou de "carrossage négatif'. L'angle de braquage d'une roue est l'angle séparant, dans un plan horizontal parallèle au sol, le plan de roue du plan médian du véhicule.

Sur la plupart des véhicules, l'angle de carrossage (on emploiera indifféremment « carrossage » ou « angle de carrossage » par la suite) est fixe pour une position particulière de la suspension et du braquage c'est à dire qu'il ne peut théoriquement pas varier indépendamment du débattement de suspension ou du braquage. Cependant, il subit des variations induites par les déformations des éléments constitutifs du dispositif de suspension provoquées par les efforts exercés par le sol sur la roue. Ces variations peuvent être importantes. Par exemple, un véhicule de tourisme courant voit son carrossage varier de plusieurs degrés sous les efforts transversaux développés sur le pneumatique lorsque le véhicule prend un virage, indépendamment de la contribution du roulis de la caisse du véhicule (qui s'incline généralement dans le même sens sous l'effet de la force centrifuge). Cette variation « élastique » du carrossage fait augmenter le carrossage (le carrossage tend vers des valeurs positives) pour la roue extérieure au virage. Inversement, le carrossage diminue (il tend vers des valeurs négatives) pour la roue intérieure au virage. On intègre depuis longtemps ces variations prévisibles dans les compromis de conception ou de réglage des dispositifs de suspension de ces véhicules courants afin de limiter les effets néfastes qu'elles ont sur le fonctionnement de la liaison au sol.

Le carrossage a en effet une grande influence sur le comportement du véhicule et les performances de la liaison au sol. En particulier, les performances d'un pneumatique sont très variables en fonction de la configuration de son aire de contact au sol et cette configuration dépend en grande mesure du carrossage. Ce sont ces variations qui motivent principalement le choix de l'angle de carrossage statique, c'est à dire l'angle de carrossage qui correspond à la position moyenne de la roue en ligne droite et pour une charge nominale. Ainsi, par exemple, on introduit généralement un carrossage statique négatif important sur un véhicule de compétition afin de compenser les variations dues aux déformations du pneumatique sous effort transversal ainsi que des éléments de suspension pourtant bien plus rigides que sur les véhicules de tourisme et au roulis de la caisse. Cette configuration est à la fois utile et acceptable en compétition car les critères d'adhérence en virage y sont prédominants. Au contraire, sur un véhicule de tourisme, l'usure des pneumatiques et la stabilité en ligne droite ayant plus de poids dans le compromis recherché, on choisit généralement un carrossage statique initial très faiblement négatif et on s'accommode de poussées de dérive réduites, principalement dans les courbes, lorsque les déformations du pneumatique et des éléments de la liaison au sol sous les efforts latéraux voient leurs effets sur le positionnement du plan de roue s'additionner aux effets du roulis du véhicule.

Dans le but d'optimiser le carrossage, en particulier lors d'accélérations transversales, on a conçu des dispositifs de suspension dont le carrossage varie en fonction du débattement vertical de la roue. De cette manière, le roulis pris par la caisse du véhicule peut induire une variation utile du carrossage qui vienne compenser en partie ou totalement l'inclinaison de la caisse du véhicule et les déformations décrites plus haut. C'est le cas des systèmes appelées « multi-bras ». Ces dispositifs exigent une conception et une architecture de véhicule spécifiques, que l'on ne peut pas, pour des raisons d'encombrement et de prix de revient, mettre en oeuvre sur la plupart des véhicules actuels. Ces systèmes ne réagissent qu'à la conséquence (débattement, roulis) d'une accélération transversale et non aux efforts qui la provoquent ce qui d'une part retarde l'effet de la correction. De plus, pour permettre une variation suffisante du carrossage, la cinématique de ces systèmes imposent des déplacements de la position de l'aire de contact par rapport au véhicule, appelées « variations de voie » et ces variations peuvent également constituer une gêne. L'amplitude des corrections de carrossage rendues possibles par de tels systèmes est donc relativement limitée lorsque l'on veut respecter le compromis nécessaire à un bon fonctionnement des autres cas de charge comme le roulage sur route bosselée, le pompage unilatéral ou au contraire simultané.

Du point de vue cinématique, en termes de degrés de liberté, les dispositifs de suspension n'ont en général qu'un degré de liberté (de la roue ou du porte-roue par rapport au véhicule). Ce degré de liberté permet des mouvements de suspension verticale qui, comme on vient de le voir, peuvent être combinés à des variations de carrossage limitées.

On connaît cependant des systèmes où le contrôle du carrossage est actif, c'est-à-dire que les modifications de géométrie sont commandées par des mouvement de vérins, comme décrit, par exemple, dans les documents US 4515390, US 4700972, et DE 19717418. Dans ces systèmes, on a permis au moins un degré de liberté supplémentaire contrôlé par des actionneurs. Ces systèmes sont très particuliers puisqu'ils ne peuvent pas concerner les véhicules les plus courants en particulier à cause de leur encombrement et de la puissance importante nécessaire aux actionneurs et naturellement pour des raison de coûts.

Un objectif de l'invention est un dispositif de suspension de construction simple, qui autorise un contrôle du carrossage, sensiblement indépendamment des oscillations verticales de la suspension et, plus généralement, des mouvements de la caisse du véhicule.

Cet objectif est réalisé par un dispositif de suspension destiné à relier un porte-roue à une caisse d'un véhicule, ledit dispositif comportant des moyens conférant au porte-roue, par rapport à la caisse, un degré de liberté de carrossage et un degré de liberté de débattement de suspension sensiblement indépendants l'un de l'autre, caractérisé en ce que lesdits moyens comprennent un support intermédiaire liant le porte-roue à la caisse, le support intermédiaire étant d'une part articulé par rapport à la caisse selon un premier axe sensiblement vertical et d'autre part articulé au porte-roue selon un deuxième axe de manière à ce qu'une rotation dudit support intermédiaire autour dudit premier axe permette ledit degré de liberté de carrossage. Le dispositif de suspension de l'invention comporte en effet deux degrés de liberté permettant des mouvements de suspension et de carrossage indépendants. Le mouvement de carrossage s'effectue de manière simple grâce à la rotation, autour d'un premier axe sensiblement vertical, du support intermédiaire. "Sensiblement vertical" signifie dans le présent contexte que le premier axe de rotation peut être incliné, par exemple dans la limite de 30° par rapport à la verticale comme il apparaîtra plus clairement dans la description détaillée des figures.

De préférence, ledit porte-roue étant destiné à porter une roue de rayon 'r' et ladite roue étant destinée à reposer au sol par l'intermédiaire d'une aire de contact, ledit dispositif est configuré de manière à ce que le mouvement de carrossage du porte-roue par rapport à la caisse admette, autour d'une position moyenne, un premier centre instantané de rotation situé dans un intervalle allant de r au dessus du sol à r en dessous du sol. Le fait que le mouvement de carrossage s'effectue autour d'un centre instantané de rotation situé à une distance limitée de l'aire de contact permet de limiter les variations de voie lors de la prise de carrossage ou de contre carrossage et également de limiter l'apport d'énergie nécessaire dans le cas d'un contrôle actif du carrossage.

Dans un mode de réalisation préféré, ledit premier centre instantané de rotation est situé dans un intervalle allant de 0.2 r au dessus du sol à 0.4 r en dessous du sol.

Afin d'assurer un fonctionnement stable, le dispositif est, de préférence, configuré de manière à ce qu'il soit proche de l'équilibre dans ladite position moyenne en l'absence d'effort transversal exercé par le sol sur la roue dans l'aire de contact et préférentiellement encore, configuré de manière à ce que, en l'absence de variations de carrossage, l'effort transversal exercé par le sol sur la roue dans l'aire de contact généré au cours du débattement de suspension ne dépasse pas une limite raisonnable par rapport au poids du véhicule. Ces conditions sont réalisées de préférence grâce à un dispositif dans lequel le mouvement de carrossage du porte-roue par rapport audit premier axe admet, autour de ladite position moyenne, un deuxième centre instantané de rotation situé sensiblement dans le plan de la roue. De préférence encore la position du deuxième centre instantané de rotation par rapport au centre de la roue forme un angle inférieur à 15°, de préférence inférieur à 5°, avec le plan de la roue.

Pour permettre un fonctionnement passif, ledit premier centre instantané de rotation peut être de préférence situé sous le plan du sol afin que des efforts transversaux exercés par le sol sur la roue dans l'aire de contact induisent une inclinaison du porte-roue par rapport à la caisse dans le sens d'une diminution de carrossage lorsque lesdits efforts transversaux sont dirigés vers l'intérieur du véhicule et dans le sens d'une augmentation de carrossage lorsque lesdits efforts transversaux sont dirigés vers l'extérieur du véhicule. Dans ce cas de fonctionnement passif lié aux efforts transversaux, le dispositif peut comporter un moyen de mesure du débattement angulaire du support intermédiaire d'en déduire lesdits efforts transversaux.

Les efforts transversaux qui s'exercent sur la roue dans l'aire de contact ont principalement comme origine l'accélération transversale subie par le véhicule lorsqu'il décrit une trajectoire courbe. La même accélération transversale s'applique sensiblement de la même façon à chaque élément du véhicule et en particulier aux éléments constitutifs du dispositif de suspension. En particulier les roues et masses associées lors du mouvement de carrossage ont tendance à se déporter vers l'extérieur du virage. Il faut bien sûr tenir compte de cet effet négatif dans la conception du dispositif. Cependant, on peut également mettre à profit cet effet dans le cadre de l'invention en le rendant utile à la variation de carrossage. Ceci est possible si par exemple la masse du support intermédiaire est répartie de telle façon par rapport à son axe de rotation que la force centrifuge qui s'applique à son centre de masse génère un couple qui tend à faire pivoter le support intermédiaire 4 dans le sens souhaité, c'est à dire dans le sens qui correspond à la variation de carrossage recherchée pour une telle accélération transversale. Dans ce cas, l'effet de l'accélération transversale est mis à profit pour aider à provoquer la variation de carrossage voulue. Ainsi, cet effet peut permettre de concevoir un dispositif selon l'invention dont le premier centre instantané de rotation est plus proche du sol pour un comportement passif comparable.

De préférence, le support intermédiaire est lié au porte-roue de façon à ce que le braquage soit sensiblement indépendant du carrossage et le dispositif de suspension peut comporter en outre des moyens de contrôle du braquage. On considère généralement que le braquage est indépendant du carrossage lorsqu'une variation de carrossage donnée (par exemple 5°) provoque une variation de braquage inférieure à 10% de celle-ci (par exemple à 0.4°).

Dans certaines conditions, il peut être nécessaire ou intéressant de prévoir en outre des moyens de contrôle aptes à influencer le carrossage de la roue. Ces moyens peuvent comprendre un élément élastiquement ou plastiquement déformable s'opposant au mouvement de carrossage, l'élément déformable étant constitué par exemple par des articulations élastomériques.

L'invention concerne également un dispositif destiné à relier en outre un porte-roue opposé appartenant à un même essieu que le porte-roue.

Enfin, l'invention concerne également un véhicule équipé d'un tel dispositif de suspension.

Plusieurs modes de réalisations de l'invention vont être décrits afin d'en illustrer les caractéristiques et d'en exposer les principes. Naturellement, de nombreux autres modes de réalisation de l'invention sont possibles comme le suggèrent les nombreuses variantes.

La figure 1 est une vue partielle selon l'axe de la roue d'un dispositif selon l'invention.

La figure 2 est un schéma du fonctionnement cinématique du dispositif de l'invention vu selon l'axe du véhicule.

Les figures 3 et 4 sont deux vues similaires à la figure 2 du dispositif de l'invention dans deux positions différentes.

La figure 5 est une vue similaire à la figure 2 d'une mode préféré de réalisation de l'invention.

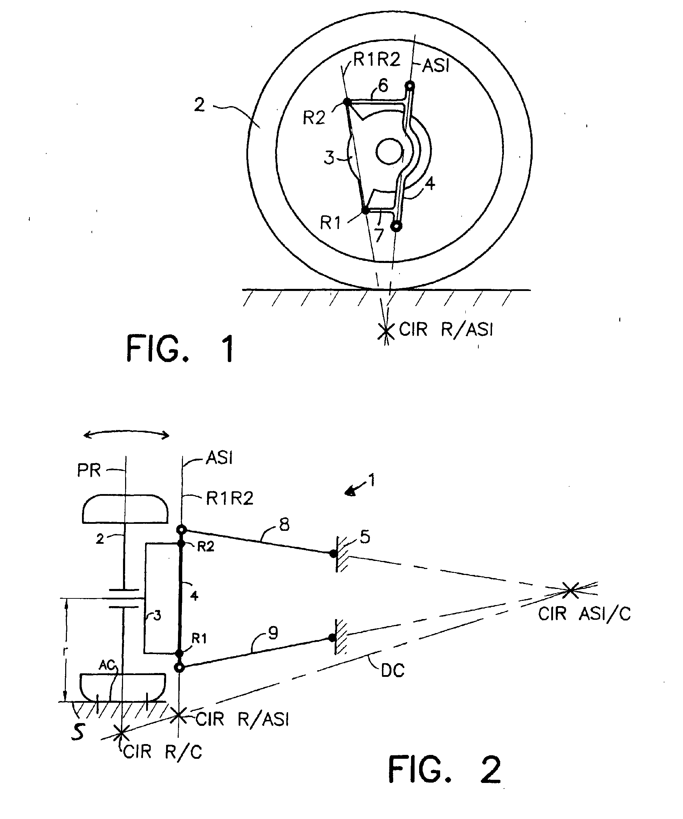

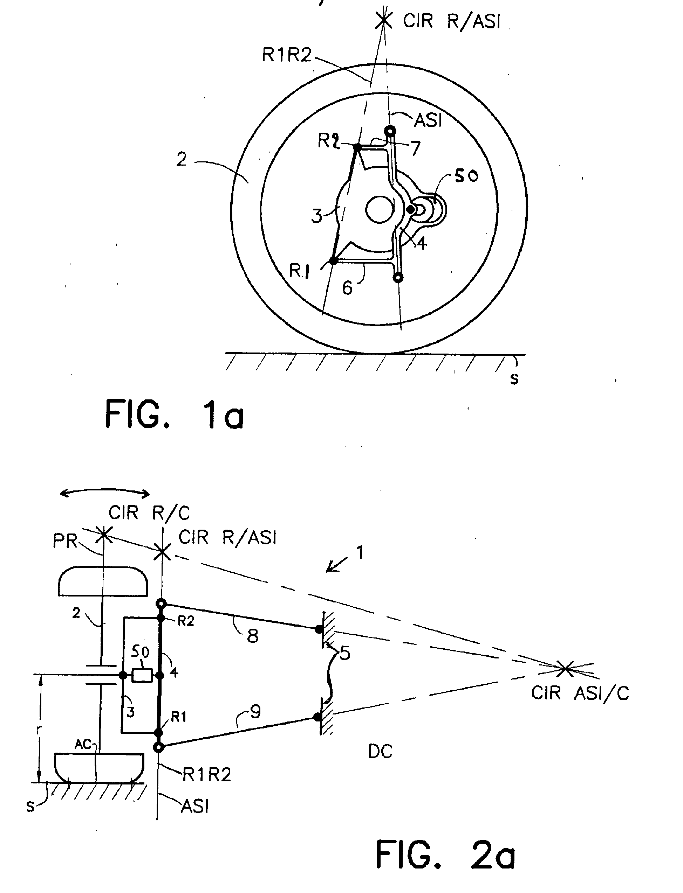

Les figures 1a, 2a, 3a, 5a sont des vues similaires à celles de figures 1, 2, 3 et 5 de modes de réalisation différents de l'invention.

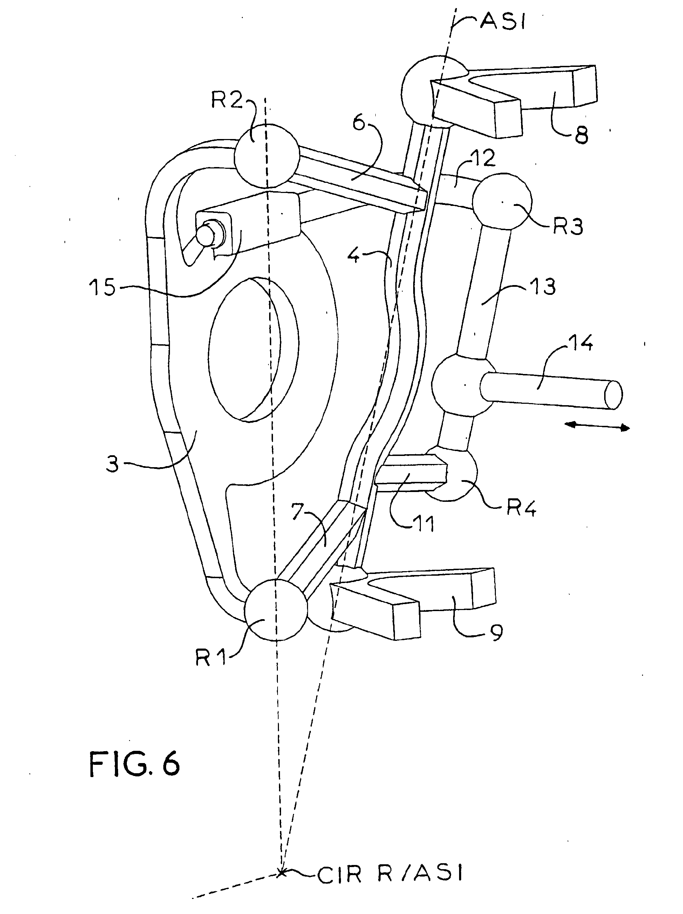

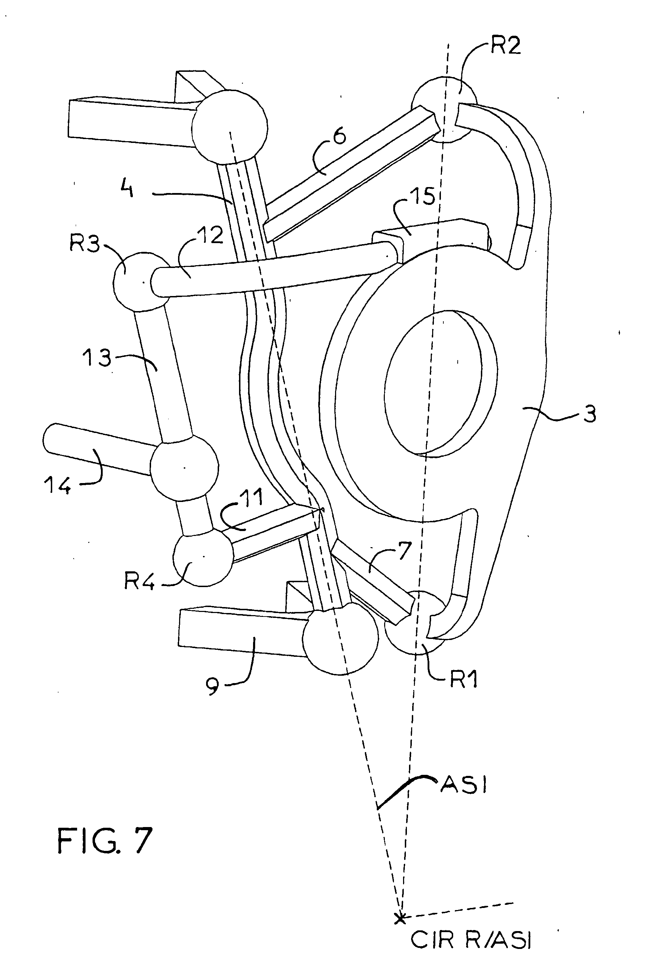

Les figures 6 et 7 sont deux vues en perspective d'un deuxième mode de réalisation de l'invention.

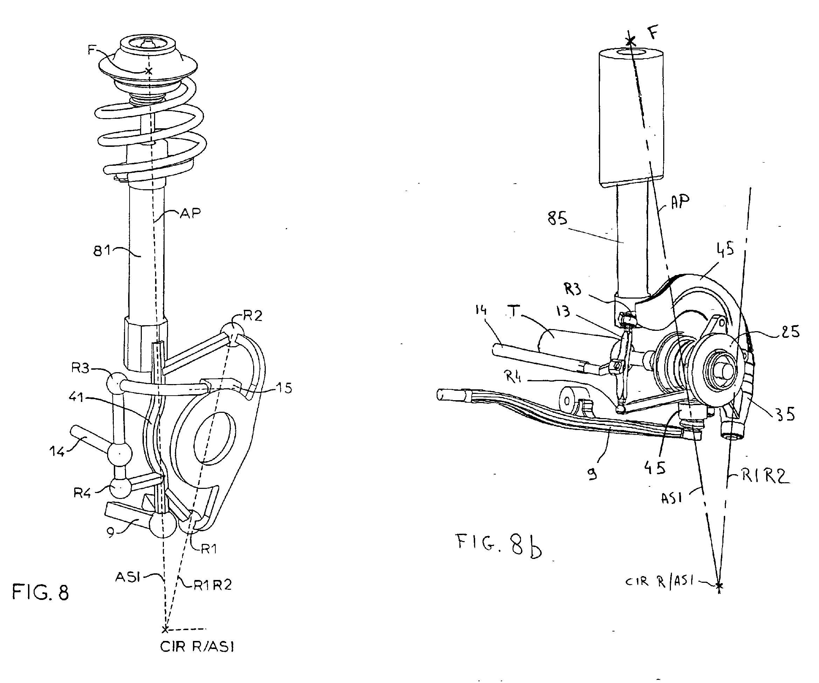

La figure 8 est une vue en perspective d'un troisième mode de réalisation.

La figure 8b est une vue en perspective d'une variante du troisième mode de réalisation.

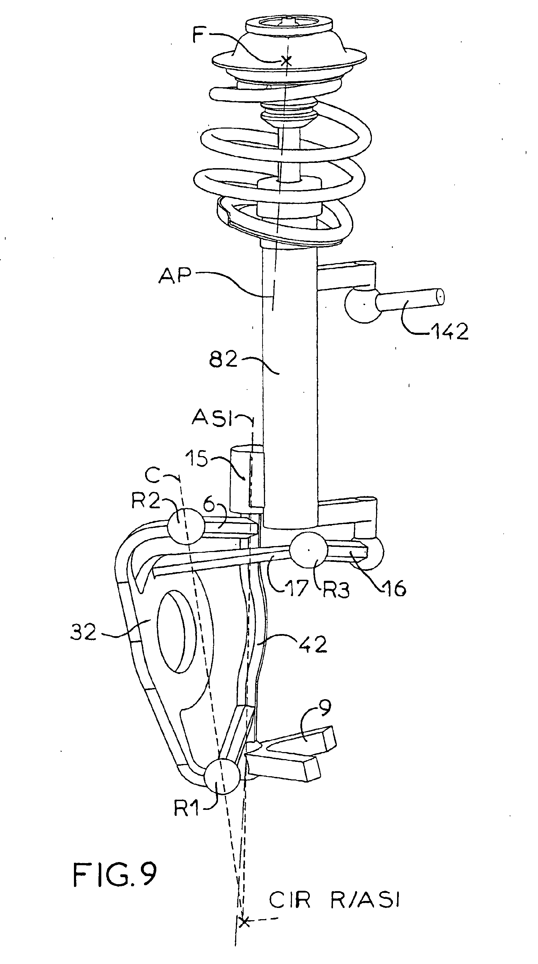

La figure 9 est une vue en perspective d'un quatrième mode de réalisation.

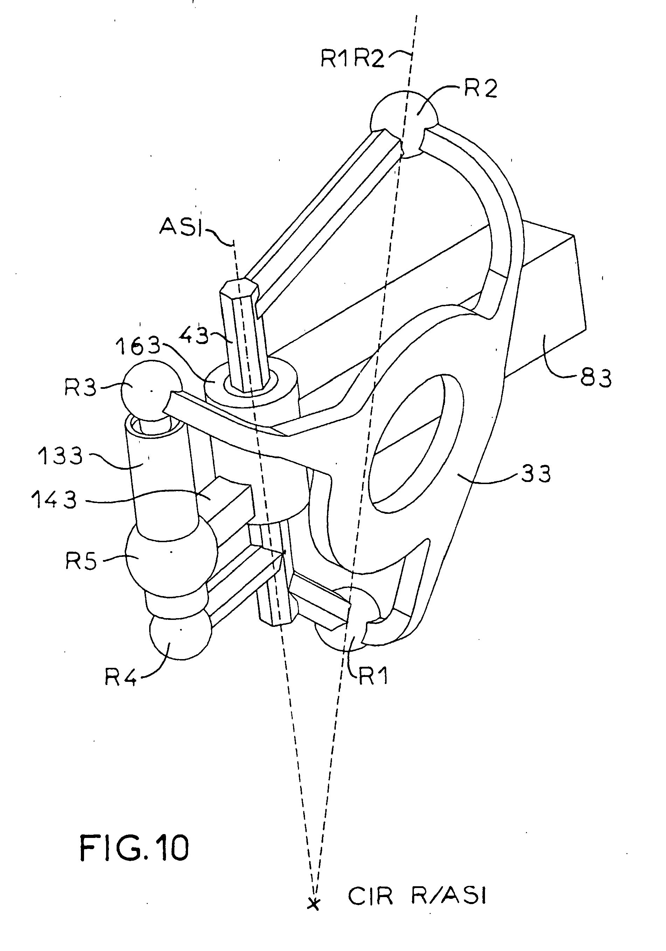

La figure 10 est une vue en perspective d'un cinquième mode de réalisation.

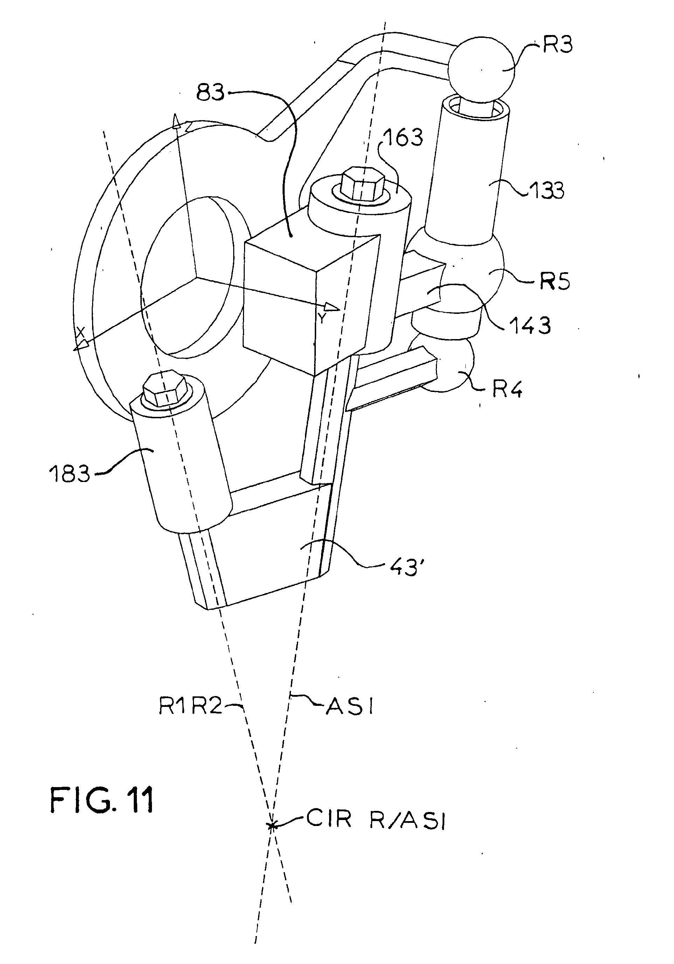

La figure 11 est une vue en perspective d'une variante du cinquième mode de réalisation.

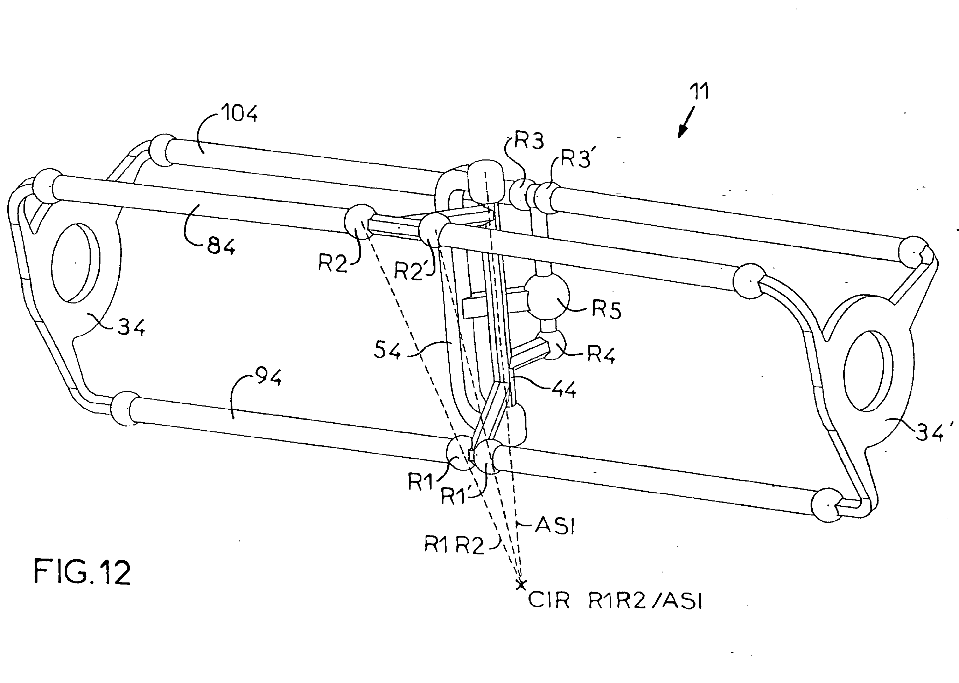

La figure 12 est une vue en perspective d'un sixième mode de réalisation.

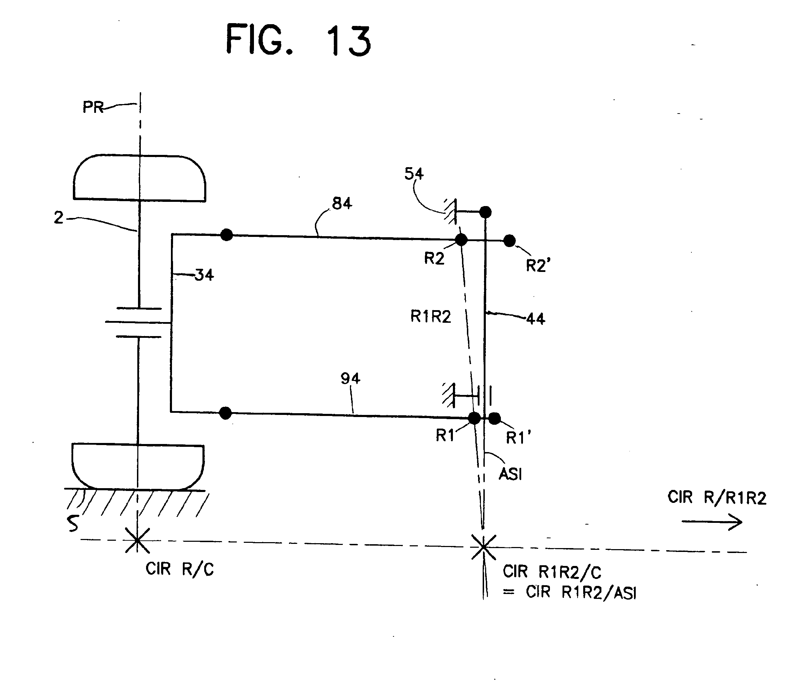

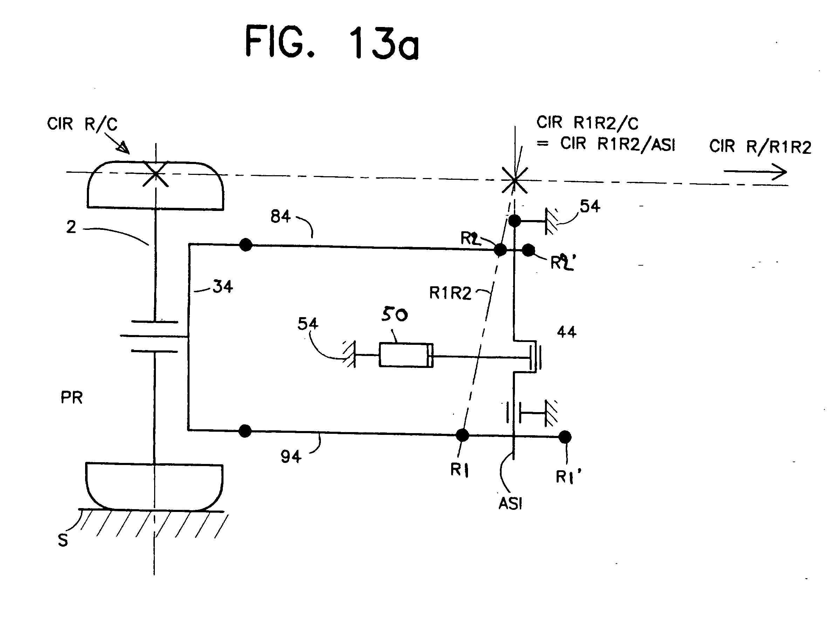

La figure 13 est un schéma du fonctionnement cinématique du sixième mode de réalisation de l'invention vu selon l'axe du véhicule.

La figure 13a est un schéma du fonctionnement cinématique d'une autre variante du sixième mode de réalisation de l'invention vu selon l'axe du véhicule.

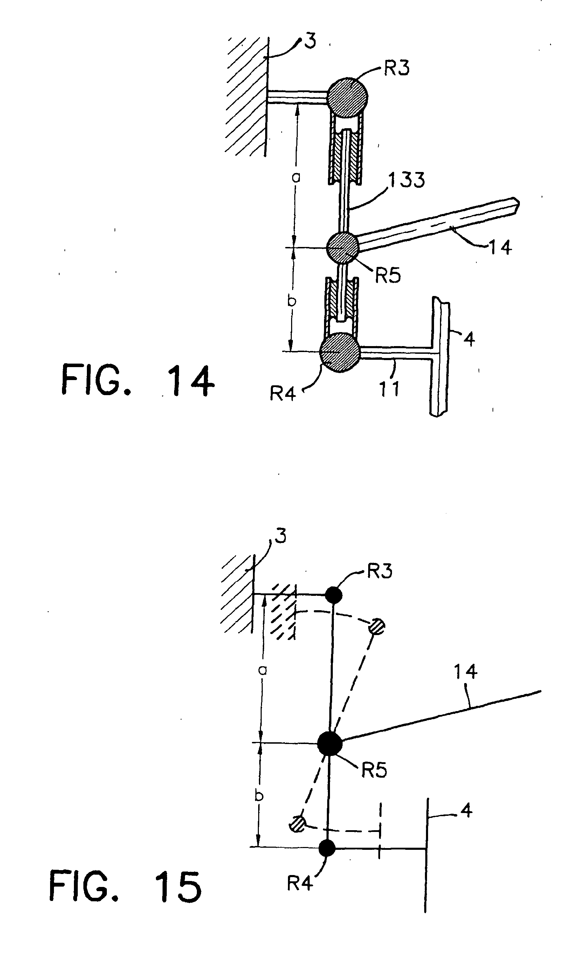

La figure 14 est un schéma de principe d'un premier mode de réalisation du basculeur de direction.

La figure 15 est un schéma de principe d'un deuxième mode de réalisation du basculeur de direction.

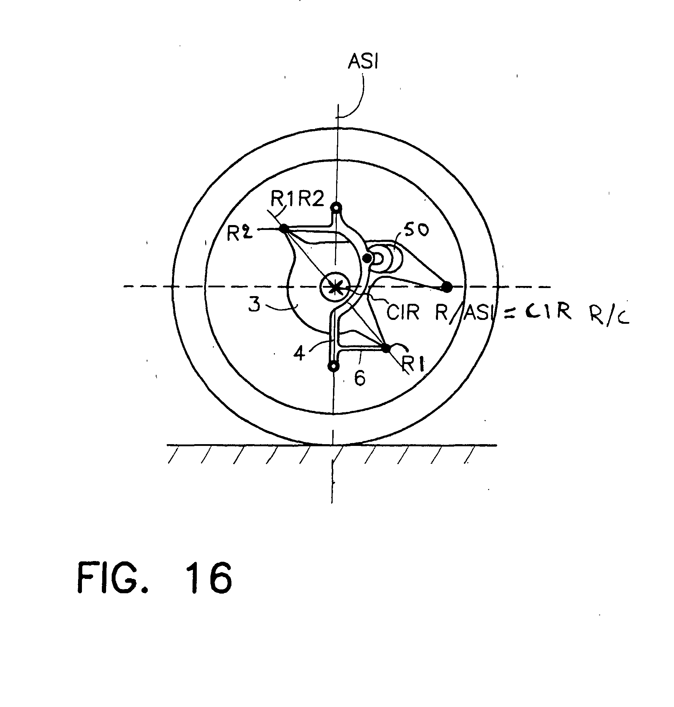

La figure 16 est une vue similaire à la figure 1 d'une variante supplémentaire de l'invention.

La figure 1 est une vue selon l'axe de la roue 2. Un support intermédiaire 4 est articulé par rapport aux éléments de suspension 8 et 9 (visibles sur la figure 2) selon un premier axe ASI Le porte-roue 3, qui porte l'axe de la roue de façon rigide, est articulé sur le support intermédiaire 4 selon un deuxième axe R1R2. Cette sorte de double charnière permet de définir, autour d'une position moyenne, une rotation du porte-roue 3 dans le plan vertical contenant l'axe de la roue (c'est à dire le plan de la figure 2, plan dans lequel s'effectue le mouvement de carrossage). Cette rotation correspond à un mouvement de carrossage de la roue et s'effectue autour du point (CIR R/ASI) commun à l'axe R1R2 et à l'axe ASI. Dans le cas où ces deux axes ne sont pas coplanaires, on peut considérer que le mouvement de carrossage s'effectue autour d'un point situé au milieu du segment le plus court joignant ces deux axes dans l'espace.

La figure 2 représente en vue selon l'axe longitudinal du véhicule, le principe d'un dispositif de suspension selon l'invention. Cette représentation plane (c'est à dire en 2 dimensions) est très commode car elle montre bien ce en quoi le dispositif selon l'invention se distingue des dispositifs de l'état de la technique. Le dispositif de suspension 1 comprend un porte-roue 3 destiné à maintenir le plan PR d'une roue 2, par rapport à la caisse 5 d'un véhicule. La roue de rayon «r» est en appui sur le sol S par l'intermédiaire de son aire de contact AC. Le mouvement indépendant de carrossage de la roue est permis par une double articulation du porte-roue 3 par rapport aux bras (ou triangles) de suspension 8 et 9. Les axes R1R2 et ASI de cette double articulation (voir également figure 1) sont superposés dans cette vue. Le mouvement de débattement de suspension est permis par une liaison du support intermédiaire 4 avec la caisse 5 par des bras supérieur 8 et inférieur 9. Ainsi, le dispositif de suspension 1 est configuré de manière à conférer au porte-roue, par rapport à la caisse 5, un degré de liberté de carrossage puisque le porte-roue 3 peut s'incliner par rapport à la caisse ainsi qu'un degré de liberté de débattement de suspension puisque le porte-roue 3 peut effectuer des mouvements sensiblement verticaux de façon connue en soi, par exemple à la manière des systèmes « multi-bras ».

En admettant l'hypothèse classique d'une liaison ponctuelle dans le plan PR de la roue 2 sur le sol S, la théorie de la colinéarité des centres instantanés de rotation dans un mouvement plan permet de situer le premier centre instantané de rotation (CIR R/C) du mouvement de carrossage du porte-roue 3 par rapport à la caisse 5 à l'intersection du plan de roue PR et de la droite (DC) portant le deuxième centre instantané de rotation (CIR R/ASI) du mouvement du porte-roue 3 par rapport à l'axe (ASI) du support intermédiaire et le troisième centre instantané de rotation (CIR ASI/C) du mouvement de l'axe (ASI) du support intermédiaire 4 par rapport à la caisse 5. Ce raisonnement cinématique est d'usage courant dans le domaine de la liaison au sol. On comprend alors que c'est le choix de la configuration, c'est à dire des dimensions et de l'orientation des différent éléments constitutifs du dispositif de suspension qui (en définissant les positions des axes caractéristiques des éléments de suspension) permet d'obtenir une position voulue du premier centre instantané de rotation (CIR R/C) du mouvement de carrossage. La figure 2 représente le dispositif de suspension dans une position moyenne, que l'on pourrait définir comme la position correspondant au roulage en ligne droite sur un sol plat, le véhicule portant sa charge nominale. Ce schéma montre un exemple de carrossage statique nul.

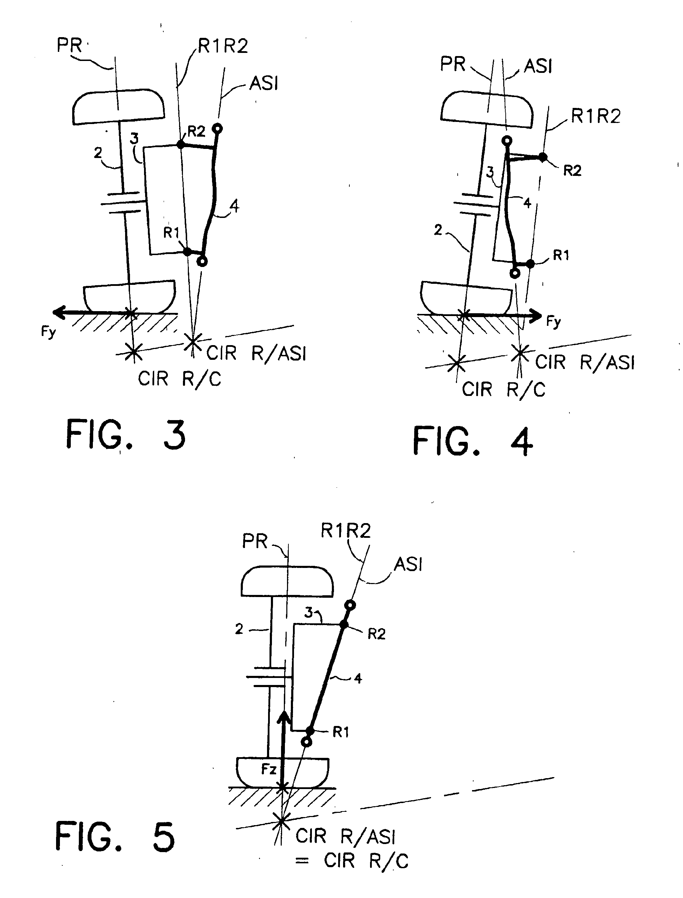

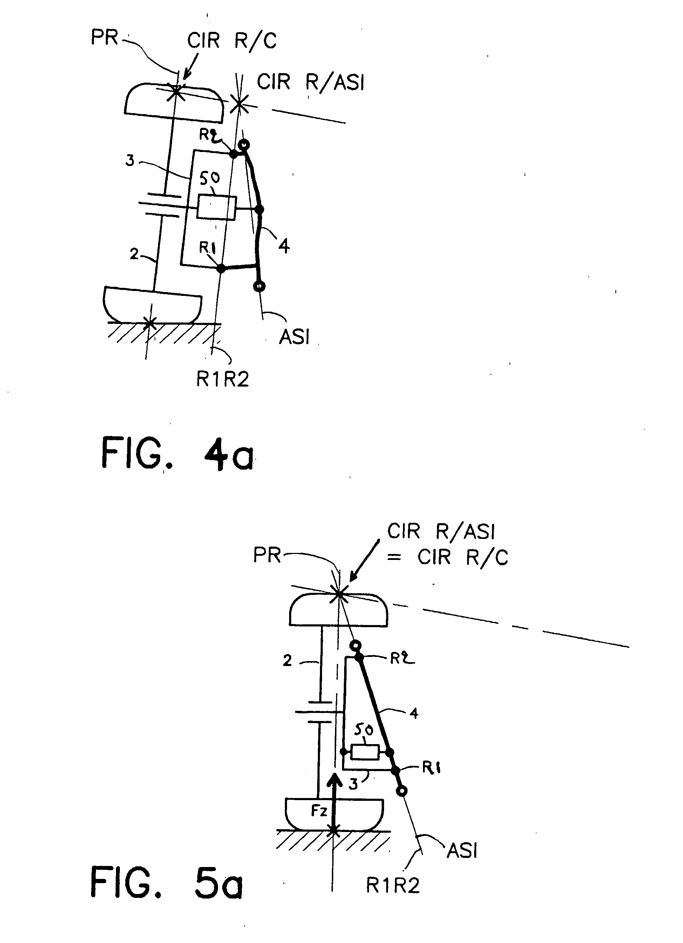

Les figures 3 et 4 montrent la cinématique de carrossage du dispositif des figures précédentes en omettant les bras de suspension. Ainsi ces figures montrent schématiquement comment la roue 2 et le porte-roue 3 s'inclinent vers l'extérieur (figure 3) ou l'intérieur (figure 4) du véhicule grâce à la rotation du support intermédiaire 4 autour du premier axe (ASI) et à la rotation du porte-roue 3 par rapport au support intermédiaire 4 autour du deuxième axe R1R2. On a représenté ici deux mouvements : le mouvement de l'axe ASI qui est lié à la caisse par les moyens de suspension connus (non représentés, voir figure 2) et le mouvement du plan de roue PR par rapport à l'axe ASI. En pratique, la figure 3 peut correspondre à la situation d'une roue gauche d'un véhicule parcourant une courbe à gauche. Les efforts Fy qu'exerce le sol S sur la roue 2 sont donc orientés vers l'extérieur du véhicule (vers la gauche de la figure). Ces efforts Fy provoquent une rotation de la roue et du porte-roue dans le sens du carrossage positif (l'angle de carrossage augmente). Cependant, la caisse du véhicule subit généralement un roulis vers l'extérieur de la courbe, c'est à dire vers la droite de la figure 3 comme le montre l'inclinaison de l'axe ASI.

Au contraire, la figure 4 peut correspondre à la situation d'une roue gauche d'un véhicule parcourant une courbe à droite. Les efforts Fy qu'exerce le sol S sur la roue 2 sont donc orientés vers l'intérieur du véhicule (vers la droite de la figure) et provoquent une rotation de la roue et du porte-roue 3 dans le sens du carrossage négatif (l'angle de carrossage diminue) cependant que la caisse du véhicule subit généralement un roulis vers l'extérieur de la courbe, c'est à dire vers la gauche de la figure 4 comme le montre l'orientation de l'axe ASI. Ce comportement est rendu possible grâce au fait que le premier centre instantané de rotation du mouvement de carrossage (CIR R/C) est situé sous le plan du sol S. Lorsque ce point est situé au dessus du plan du sol, les efforts transversaux (Fy) ont bien sûr un effet inverse sur le comportement du système. Dans ce cas, il faut « forcer » le système en utilisant un actionneur pour contrôler les mouvements relatifs du porte-roue 3 et du support intermédiaire 4 (par exemple, un vérin).

La figure 5 représente une configuration particulière du dispositif de l'invention tel que décrit aux figures précédentes. La particularité réside dans le fait que le premier axe ASI du support intermédiaire 4 coupe le deuxième axe R1R2 sensiblement dans le plan de roue PR. Ainsi, le deuxième centre instantané de rotation (CIR R/ASI) du mouvement du porte-roue 3 par rapport à l'axe ASI et le premier centre instantané de rotation (CIR R/C) du mouvement de carrossage du porte-roue 3 par rapport à la caisse sont confondus. Ceci permet de rendre le comportement en carrossage sensiblement indépendant de la charge verticale Fz portée par la roue. Cette configuration présente un équilibre parfaitement stable, c'est à dire que même en l'absence de raideur au niveau des articulations (comme c'est le cas pour des rotules mécaniques), le dispositif est en équilibre dans sa position moyenne en l'absence d'effort transversal Fy exercé par le sol sur la roue dans l'aire de contact. Dans la pratique, compte tenu des tolérances de fabrication et des différents éléments déformables comme le pneumatique, une configuration proche de l'équilibre est satisfaisante en terme de fonctionnement. Lorsque la position par rapport au centre de la roue du deuxième centre instantané de rotation (CIR R/ASI) forme un angle inférieur à 15°, de préférence inférieur à 5°, avec le plan de la roue, cette condition est satisfaite.

Les figures 1a, 2a et 4a représentent une configuration différente du dispositif de suspension des figures 1, 2 et 4 d'une manière permettant une comparaison graphique claire. Le système est en effet configuré de façon à ce que le mouvement de carrossage se fasse autour d'un point situé dans la partie haute du plan de roue PR. selon les mêmes principes qu'exposés plus haut, on peut déterminer la position du centre instantané de rotation du mouvement de carrossage de la roue 2 par rapport à la caisse 5 (CIR R/C). Du fait que ce point se situe maintenant au dessus du sol, le système doit comporter un moyen de contrôle actif car le carrossage "naturel" occasionné par les efforts transversaux (Fy) n'est pas orienté dans le sens recherché. Au contraire, un moyen de contrôle actif tel qu'un vérin 50 permet d'imposer le carrossage adapté à la situation de roulage du véhicule. Le moyen de contrôle actif 50 agit de préférence entre le support intermédiaire 4 et le porte-roue 3 comme représenté sur les figures.

La figure 5a est l'équivalant de la figure 5 pour une configuration active proche de celle des figure 1a, 2a et 4a. Le premier axe ASI du support intermédiaire 4 coupe le deuxième axe R1R2 sensiblement dans le plan de roue PR. Ainsi, le deuxième centre instantané de rotation (CIR R/ASI) du mouvement du porte-roue 3 par rapport à l'axe ASI et le premier centre instantané de rotation (CIR R/C) du mouvement de carrossage du porte-roue 3 par rapport à la caisse sont confondus (dans la position moyenne représentée ici). Cette configuration présente un équilibre mais cet équilibre est ici instable. Des avantages de cette configuration sont d'une part l'absence d'effort sur le moyen de contrôle actif 50 dans la position moyenne en l'absence d'effort transversal exercé sur la roue et d'autre part une meilleure insensibilité à la variation de la charge (Fz) portée par la roue.

Les figures 6 et 7 représentent un mode de réalisation du dispositif de suspension de l'invention. Sur cet exemple, le mouvement de débattement de suspension est assuré par un système à double triangles, connu en soi, comprenant un triangle supérieur 8 et un triangle inférieur 9. L'axe ASI est comme précédemment matérialisé par les rotules liant les triangles 8 et 9 au support intermédiaire 4. Le porte-roue 3 est articulé au support intermédiaire 4 selon l'axe R1R2 défini ici par la position des rotules R1 et R2. Cette liaison pivot non-glissant peut également être assurée par un palier lisse comportant des butées axiales ou une paire de roulements coniques, par exemple. L'axe R1R2 coupe l'axe ASI pour définir le deuxième centre (CIR R/ASI) de rotation du mouvement du porte-roue 3 par rapport à l'axe ASI du support intermédiaire 4 dans le plan de carrossage. Le braquage de la roue est contrôlé par une biellette de direction 14. Afin que les variations de carrossage n'influencent pas le braquage, la biellette de direction 14 n'est pas reliée directement au porte-roue 3 mais à un basculeur 13. Une extrémité de ce basculeur 13 est reliée au support intermédiaire 4 par l'intermédiaire d'un bras 11. L'autre extrémité est liée au porte roue 3 par l'intermédiaire d'un bras pivotant 12 pour accommoder les variations géométriques dues au mouvement de carrossage. La position de la biellette de direction 14 sur le basculeur 13 peut être choisie au contraire pour que le braquage influence le carrossage dans la mesure où cela peut être souhaité.

On peut visualiser sur la figure 7 l'effet d'inertie décrit plus haut. Sur cet exemple, le support intermédiaire 4 tourne autour du premier axe ASI pour permettre le degré de liberté de carrossage du porte-roue 3. La répartition des masses du support intermédiaire 4 par rapport à l'axe ASI peut être telle que la force centrifuge appliquée au support génère un couple utile pour la variation de carrossage désirée. Par exemple, si la figure 7 représente le dispositif de suspension d'une roue droite d'un véhicule engagé dans un virage à gauche, l'effet voulu est une rotation du support intermédiaire 4 telle que les rotules R1 et R2 se déplacent vers l'intérieur du véhicule et que la rotule R4 s'en écarte. Pour obtenir cet effet, il suffit que le centre de masse du support intermédiaire 4 se situe, par rapport à l'axe ASI, du coté de la rotule R4. On peut par exemple pour cela prévoir d'augmenter artificiellement la masse de la rotule R4.

La figure 8 représente un autre mode de réalisation du dispositif de suspension de l'invention. Sur cet exemple, le mouvement de débattement de suspension est assuré par une jambe de force MacPherson. Le support intermédiaire 41 est solidaire de la partie inférieure de la jambe de force 81. L'axe de rotation (ASI) du support intermédiaire 41 est défini par la position de la rotule qui le lie au triangle inférieur 9 et par la position du point F d'articulation de la partie supérieure de la jambe de force 81 par rapport à la caisse. Ainsi, on utilise le même pivot pour la direction selon le principe MacPherson et pour l'articulation du support intermédiaire 41. Le reste du dispositif est identique à ce qui est décrit sur les figures 6 et 7, en particulier en ce qui concerne l'articulation autour du deuxième axe R1R2 et le mécanisme de contrôle du braquage par la biellette de direction 14.

La figure 8b représente une variante du dispositif de la figure 8. Le support intermédiaire 45 est solidaire de la partie inférieure de la jambe de force 85. Comme sur la figure 8, l'axe de rotation (ASI) du support intermédiaire 45 est défini par la position de la rotule qui le lie au triangle inférieur 9 et par la position du point F d'articulation de la partie supérieure de la jambe de force 85 par rapport à la caisse. La liaison pivot assurée par les rotules R1 et R2 sur la figure 8 est réalisée ici par un pivot axial (RIR2) reliant le porte-roue 35 au support intermédiaire 45 à la manière de la figure 11. On a représenté également le moyeu 25 et un arbre de transmission T. Le mécanisme de contrôle du braquage par la biellette de direction 14 est comparable à celui décrit à la figure 8 sauf que la rotule supérieure R3 du basculeur 13 est ici reliée à la jambe de force 85 et la rotule inférieure R4 est reliée à un bras du porte-roue 35.

La figure 9 représente un autre mode de réalisation du dispositif de suspension de l'invention sur la base d'un système MacPherson. La différence essentielle avec le dispositif de la figure 8 est que le support intermédiaire 42 est articulé par rapport à la jambe de force 82 par une liaison pivot non glissant 15. Ainsi le premier axe ASI de rotation du support intermédiaire 42 est distinct de l'axe de pivot AP de braquage défini de manière connue pour un système MacPherson par les positions du point F de liaison à la caisse et de la rotule liant le triangle inférieur 9 au support intermédiaire 42. Ces deux axes peuvent être très complètement distincts, relativement proches (comme sur l'exemple de la figure 9) ou confondus selon les effets recherchés. Le deuxième axe R1R2 coupe l'axe ASI pour définir le deuxième centre instantané de rotation (CIR R/ASI) du porte-roue 32 par rapport à l'axe du support intermédiaire 42 dans le plan de carrossage. Pour permettre de diriger le véhicule, de manière connue en soi, on contrôle l'orientation de la jambe de force 82 par l'intermédiaire de la biellette de direction 142. Ce mouvement de rotation autour de l'axe de pivot est transmis au porte-roue 32 grâce à une biellette 16 agissant sur un bras 17 du porte-roue. De cette manière, l'angle de braquage est peu affecté par les variations de carrossage autour de la position moyenne. Alternativement, la biellette 16 peut être directement reliée à la commande de direction si le mouvement de la commande de direction est sensiblement selon l'axe de la biellette 16. C'est le cas notamment des commandes de direction longitudinales de nombreux véhicules poids lourds.

La figure 10 montre l'application de l'invention dans le cadre d'une suspension à bras oscillants (tirés ou poussés). Le support intermédiaire 43 est articulé sur le bras oscillant 83 par un liaison pivot 163 de manière à pouvoir tourner selon l'axe ASI. Le porte-roue 33 est lié au support intermédiaire 43 par les rotules R1 et R2 disposées de manières à définir l'axe R1R2. le support intermédiaire 43 est en outre lié par une rotule R4 à une extrémité du basculeur 133. L'autre extrémité du basculeur est liée au porte-roue 33 par la rotule R5. Comme le basculeur est également lié par une rotule R5 fixée au bras oscillant 83, le braquage de la roue est contrôlé indépendamment du carrossage généré par la rotation du support intermédiaire 43. Afin de permettre les variations de distance entre les rotules R3 et R4 au cours des mouvements de carrossage du dispositif, le basculeur 133 est ici télescopique. Ce moyen réalise donc la même fonction que la liaison pivot (15) des figures 6, 7 et 8. Comme dans les exemples précédemment décrits, le mouvement du porte-roue dans le plan de carrossage est, autour d'une position moyenne, un mouvement de rotation dont le centre (CIR R/ASI) est l'intersection des axes ASI et R1R2 s'ils sont coplanaires ou un point situé au milieu du segment le plus court joignant ces deux axes s'ils ne sont pas coplanaires.

La figure 11 montre une vue (selon une orientation opposée à celle de la figure 10) d'un dispositif équivalent dans lequel les rotules R1 et R2 sont remplacées par une liaison pivot non-glissant 183 qui matérialise le même deuxième axe R1R2. Le support intermédiaire 43' a une forme en 'V', chaque branche pivotant par rapport aux éléments qu'elles relient. Le reste du dispositif est identique à celui de la figure 10. Bien que fonctionnellement équivalent, on voit que ce mode de réalisation peut présenter des caractéristiques différentes en matière par exemple d'encombrement ou de robustesse. Alternativement, au lieu du système de contrôle du braquage représenté ici, on peut mettre en oeuvre le principe représenté à la figure 9. La biellette (16 sur la figure 9) peut dans ce cas être sensiblement parallèle au bras oscillant 83. Cette combinaison est particulièrement intéressante du point de vue de la simplicité et de la compacité du dispositif.

La figure 12 montre le principe de l'application de l'invention au contrôle du carrossage des deux roues d'un même essieu tel que décrit dans la demande de brevet EP 1070609. Le dispositif 11 selon l'invention est alors destiné à relier en outre un porte-roue opposé 34' appartenant à un même essieu que le porte-roue 34. Le support intermédiaire est articulé, selon un premier axe ASI sensiblement vertical, par rapport à la caisse du véhicule directement ou par l'intermédiaire d'un élément comme un support 54 solidaire de la caisse. Le porte-roue 34 est lié par bras de suspension supérieur 84 et inférieur 94 aux rotules R1 et R2 du support intermédiaire 44. On n'a pas représenté ici les liaisons contrôlant la position longitudinale et la rotation du porte-roue. Il peut s'agir d'un bras longitudinal tout à fait classique dans ce domaine des essieux « multi-bras » pourvu, bien sûr, qu'il autorise le mouvement de carrossage du porte-roue. Le braquage est contrôlé sur cet exemple de manière similaire aux figures 10 et 11. Le porte-roue opposée 34' est lié de façon symétrique à ce qui vient d'être décrit pour le porte-roue 34. Les rotules R1, R2 et R3 peuvent être confondues respectivement avec les rotules opposées R1', R2' et R3'. Elles sont représentées ici, au contraire, distantes.

Afin de bien comprendre le fonctionnement de cet essieu, la figure 13 montre, selon le même type de schéma que la figure 2, les raisonnements cinématiques qui régissent le carrossage du porte-roue 34. Le mouvement de débattement de suspension est permis par une liaison du porte-roue 34 au support intermédiaire 44 par des bras supérieur 84 et inférieur 94. Le mouvement indépendant de carrossage de la roue est permis par une rotation du support intermédiaire 44 par rapport à la caisse ou au support 54. Ainsi, le dispositif de suspension est configuré de manière à conférer au porte-roue, par rapport à la caisse, un degré de liberté de carrossage puisque le porte-roue peut s'incliner par rapport à la caisse et un degré de liberté de débattement de suspension puisque le porte-roue 34 peut effectuer des mouvements sensiblement verticaux de façon connue en soi, par exemple à la manière des systèmes « multi-bras ».

En admettant l'hypothèse classique d'une liaison ponctuelle dans le plan PR de la roue 2 sur le sol S, la théorie de la colinéarité des centres instantanés de rotation dans un mouvement plan permet de situer le premier centre instantané de rotation (CIR R/C) du mouvement de carrossage du porte-roue 3 par rapport à la caisse 54 à l'intersection du plan de roue PR et de la droite (DC) portant les deux autres centres instantanés de rotation, celui du mouvement de l'axe R1R2 de la liaison des bras 84 et 94 au support intermédiaire 44 par rapport à la caisse (CIR R1R2/C) et celui du mouvement du porte-roue 34 par rapport à l'axe R1R2 du support intermédiaire (CIR R/R1R2). Ce raisonnement cinématique est analogue à celui de la description de la figure 2. L'exemple illustré ici est particulier : d'une part le centre instantané de rotation (CIR R/R1R2) du mouvement du porte-roue 34 par rapport à l'axe R1R2 est situé sur cet exemple à une distance infinie du fait du parallélisme des bras 84 et 94 et d'autre part, la droite DC est représenté horizontale car les bras sont eux aussi représentés horizontaux. On comprend que c'est le choix de la configuration, c'est à dire des dimensions et de l'orientation des différents éléments constitutifs du dispositif de suspension qui (en définissant les positions des axes caractéristiques des éléments de suspension) permet d'obtenir une position voulue du premier centre instantané de rotation (CIR R/C) du mouvement de carrossage. La figure 13 représente le dispositif de suspension dans une position moyenne, que l'on pourrait définir comme la position correspondant au roulage en ligne droite sur un sol plat, le véhicule portant sa charge nominale. Ce schéma montre un exemple de carrossage statique nul.

La figure 13a montre selon le schéma de la figure 13 une configuration différente. Cette configuration dans laquelle le centre instantané de rotation (CIR R/C) du mouvement de carrossage de la roue 2 par rapport à la caisse 54 est située dans la partie haute du plan de roue PR est comparable à celle de la figure 2a par exemple. Comme expliqué plus haut pour les exemples des figures 1a, 2a, 4a et Sa, l'emploi d'un moyen de contrôle actif est nécessaire pour que le carrossage désiré soit obtenu. On a représenté pour cela un vérin 50 agissant par exemple entre le support intermédiaire 44 et la caisse ou un support 54 lié à la caisse du véhicule.

Les figures 14 et 15 représentent des modes de réalisation du basculeur de direction illustré sur les figures 10 à 12. La fonction d'un tel basculeur est de permettre la variation de la distance entre les rotules R3 et R4 lors des variations de carrossage tout en maintenant un rapport prédéterminé entre les distances a et b séparant respectivement les rotules R3 et R4 de la rotule R5 qui reçoit la biellette de direction 14. La figure 14 représente une solution basée sur le fait que le basculeur est télescopique grâce à des connections élastomériques entre les rotules R3 et R4 et le basculeur 133. La figure 15 représente une solution basée sur l'élasticité des bras de liaison. S'ils sont conçus pour être en équilibre autour de la position moyenne, ces deux moyens élastiques peuvent avoir une fonction de ressort de carrossage agissant contre les variations autour de cette position moyenne. On comprend que l'on peut influencer le comportement du dispositif de suspension par la simple modification des raideurs dans le sens que l'on souhaite. De plus, la proportion entre les segments a et b peut être différente (ou le devenir lors de variations de carrossage) de celle donnant une indépendance parfaite entre le braquage et le carrossage.

La figure 16 représente une variante "intermédiaire" entre les configurations des figure 1 et 1a. Le premier centre instantané de rotation (CIR R/C), c'est à dire l'intersection des premier (ASI) et deuxième (R1R2) axes, est ici situé au centre le la roue 2. Ceci illustre le fait que le principe de l'invention permet de choisir la position de ce point dans une large gamme. Cette configuration particulière peut être particulièrement intéressante quant au fonctionnement d'une éventuelle transmission (non représentée) car le mouvement de carrossage du plan de roue n'implique ici aucun déplacement transversal du centre de la roue par rapport à la caisse. Le mouvement de carrossage a lieu autour d'un axe horizontal représenté en trait pointillé sur la figure 16. Ainsi, la biellette de direction peut être connectée directement sur le porte-roue 3 pourvu que cette connexion soit sur cette ligne horizontale pour éviter que les changements de carrossage aient une influence sur le braquage.

Un avantage commun aux configurations "actives" des figures 1a, 2a, 4a, 5a et 13a est un encombrement réduit lors du débattement de carrossage au niveau de la partie supérieure de la roue. En effet, dans les exemples de ces figures, la rotation du plan de roue s'effectue autour d'un point (CIR R/C) situé à proximité ou même dans la section de la partie supérieure de la roue 2. Ainsi, lors du carrossage , la partie supérieure de la roue 2 ne se déplace pratiquement pas par rapport à la caisse et le cas échéant par rapport à l'aile ou au passage de roue de la carrosserie du véhicule. Seul le débattement vertical de la suspension doit alors être pris en compte dans le dessin de la carrosserie. Un autre avantage de ces configurations concerne la variation de demi-voie lors des mouvements de carrossage. Si, dans une situation telle qu'une courbe à droite (comme représenté à la figure 4a mais le même raisonnement s'applique également aux configurations des figures 13a et 16), le vérin 50 impose à la roue 2 un carrossage négatif, ce mouvement de carrossage se faisant autour d'un point (CIR R/C) situé en haut de la roue 2, le bas de la roue (et donc l'aire de contact) est repoussé (par rapport à la caisse 5) vers l'extérieur de la courbe. Ceci correspond à ce que l'on appelle une variation de demi-voie positive. Cette caractéristique peut être avantageuse pour la stabilité du comportement du véhicule et elle présente l'avantage de combattre le transfert de charge par un déplacement du centre de gravité de la caisse 5 vers l'intérieur de la courbe. Ainsi, la surcharge de la roue extérieure vis à vis de la roue intérieure au virage est réduite. Ceci est un facteur positif pour le potentiel d'adhérence global de l'essieu.

Comme le montre l'ensemble des figures, de nombreuses variantes sont possibles. La plupart des systèmes de suspension connus sont susceptibles d'accueillir le dispositif de l'invention puisqu'il consiste à leur ajouter un degré de liberté de carrossage. De même, les différentes versions des moyens de contrôle du braquage sont généralement interchangeables. Ainsi, un grand nombre de combinaisons différentes sont envisageables en fonctions des spécificités du véhicule concerné et des performances recherchées.

Comme on l'a vu, on choisit de préférence, en fonction du fonctionnement souhaité, une position du premier centre instantané de rotation du degré de liberté de carrossage (CIR R/C) dans un intervalle allant de r au dessus du sol à r sous le sol (r étant le rayon de la roue). Le fait de positionner ce point près du sol permet de limiter la variation de voie. Par exemple, dans le cas d'un premier centre instantané de rotation situé à r du sol et pour une roue de 300 mm de rayon, un carrossage de 5° provoque un déport de l'aire de contact par rapport à la caisse (variation de demie voie) d'environ 25 mm. On a constaté que cette valeur doit être considérée comme une limite à ne pas dépasser. Cependant, lorsque le premier centre instantané de rotation du degré de liberté de carrossage (CIR R/C) se situe au dessus du sol, c'est à dire que le dispositif de l'invention doit comporter un actionneur afin d'orienter activement le carrossage du plan de roue (voir plus haut la description des figures 3 et 4), des expérimentations ont montré qu'au delà d'une certaine hauteur, la puissance nécessaire à ce fonctionnement actif rend le système trop consommateur d'énergie. Cette hauteur limite s'est avérée correspondre sensiblement à un rayon de roue. Avantageusement encore en matière d'énergie nécessaire et de variation de voie, la position du premier centre instantané de rotation (CIR R/C) du degré de liberté de carrossage se situe au niveau du sol S ou au dessus de ce niveau mais à une distance réduite, par exemple une distance correspondant à 0.1 r.

Au contraire, si le critère énergétique n'est pas prépondérant, on peut préférer mettre en oeuvre l'invention dans les conditions cinématiques décrites aux figures 1a, 2a, 4a ou 13a. Dans ce cas, le centre instantané de rotation (CIR r/c) se situe avantageusement dans un intervalle allant de 1.5 r à 2.5 r au dessus du sol, de préférence entre 1,5 r et 2 r dans le but de permettre un encombrement minimal sous les ailes du véhicule.

On comprend que selon l'importance relative des différents critères, on peut déterminer un compromis entre l'encombrement, l'énergie nécessaire et les contraintes de conception mécanique et que ce compromis correspondra à une certaine hauteur du centre instantané de rotation (CIR R/C) du mouvement de carrossage de la roue par rapport à la caisse dans la gamme décrite allant de r sous le sol à 2,5 r au dessus du sol.

Dans les cas de fonctionnement passif tels que décrits plus haut, une façon de vérifier le fonctionnement du dispositif de l'invention (et de mesurer sa sensibilité) est d'exercer un effort transversal (à l'aide, par exemple, d'une plaque à billes) au niveau de l'aire de contact de la roue d'un véhicule équipé du dispositif de l'invention et de mesurer la variation de l'angle de carrossage.

Au contraire, le moyen de contrôle peut avoir un rôle passif de régulation des mouvements de carrossage provoqués par exemple par les efforts transversaux comme exposé par les figures 3 et 4.

Qu'il soit passif ou actif le moyen de contrôle, s'il est pilotable, peut être commandé en fonction de divers paramètres de roulage du véhicule (par exemple vitesse, accélération longitudinale ou transversale, position du volant, vitesse de rotation du volant, couple exercé sur le volant, roulis, vitesse de roulis, accélération de roulis, lacet, vitesse de lacet, accélération de lacet, efforts sur les roues y compris la charge verticale, type de conduite ou comportement souhaité par le conducteur).

Suivant une construction similaire, le moyen de contrôle peut comprendre un moyen de mesure des mouvements de carrossage. Dans le cas de mouvements de carrossage provoqués par les efforts transversaux, cette mesure permet par des méthodes connues en soi de connaître ces efforts. De même dans les configurations utilisant un moyen de contrôle actif, on peut de manière connue en soi mesurer l'effort transmis par le moyen de contrôle actif et en déduire les efforts transversaux s'exerçant sur la roue dans l'aire de contact. Cette information est utile par exemple pour piloter des systèmes de sécurité ou de régulation du comportement du véhicule et naturellement pour piloter le moyen de contrôle actif le cas échéant.

Les différents exemples des figures illustrent le fait que le dispositif de suspension de l'invention peut être réalisé à partir de principes de suspension très différents, pourvu que l'on obtienne la définition cinématique désirée. En particulier, les éléments que l'on a représentées dans des formes arbitraires peuvent prendre toute forme convenable permettant de positionner adéquatement les points et les axes caractéristiques et naturellement de supporter les contraintes de la liaison au sol. De même, les figures représentent des cas où l'articulation du porte-roue est une articulation « virtuelle » autour du deuxième centre instantané de rotation (CIR R/ASI), c'est à dire qu'elle n'est pas matérialisée en ce point par un axe mécanique mais elle résulte de l'articulation de plusieurs éléments. Le fait que cette articulation soit virtuelle permet de positionner le centre de cette rotation en tout point du plan et en particulier à proximité du sol ou même sous le sol.

La plupart des figures représente les principes de l'invention en projection sur un plan orthogonal au sol et transversal au véhicule passant par le point d'application de la résultante des forces dans l'aire de contact. Cette représentation en deux dimensions est avantageuse afin d'illustrer clairement les caractéristiques essentielles du dispositif de l'invention dont l'objectif est une variation contrôlée du carrossage. Dans cette représentation, le mouvement de carrossage est une rotation dans le plan autour d'un point de pivot (centre instantané de rotation). Il ne faut cependant pas oublier qu'une rotation s'effectue en réalité (en trois dimensions) autour d'un axe de pivot, réel ou virtuel (axe instantané de rotation). Cet axe est représenté par un point dans la représentation plane. Cet axe peut être construit sensiblement parallèle au plan du sol et à l'axe longitudinal du véhicule pour permettre les variations de carrossage visées. Cependant, en faisant varier l'orientation de cet axe, on peut créer des effets supplémentaires de braquage, de pince, d'ouverture ou d'enroulement en fonction des efforts transversaux (courbe) et longitudinaux (freinage, accélération) subis par la roue dans l'aire de contact. L'homme du métier sait, en procédant à des essais et/ou par des méthodes théoriques, déterminer l'orientation qu'il convient d'adopter en fonction du comportement qu'il attend de ce dispositif. Des expérimentations ont par exemple montré qu'une inclinaison de l'axe de pivot de 6° par rapport à l'horizontale permet d'induire un braquage lié au carrossage, selon un angle 10 fois inférieur à celui du carrossage. Ainsi lorsque les efforts transversaux induisent un carrossage de 5°, le braquage est d'environ 0.5°. L'inclinaison de l'axe de pivot peut être obtenu par exemple en équipant le véhicule d'un dispositif incliné de 6° par rapport à la verticale.

Les articulations des différents éléments du dispositif de suspension de l'invention peuvent être réalisées de diverses manières. Les articulations élastomériques utilisées couramment dans le domaine de la liaison au sol peuvent permettre de simplifier l'obtention de l'équilibre du système car elles introduisent des raideurs. D'autre part, il est connu qu'elles favorisent le confort du véhicule.

Les moyens de contrôle (représentés schématiquement sur les figures par un vérin télescopique 50) peuvent prendre diverses formes. On peut par exemple mettre également en oeuvre des vérins télescopiques ou rotatifs, hydrauliques ou électriques, des moteurs linéaires, des systèmes à vis entraînés par des moteurs électriques ou hydrauliques ou des moteurs électriques asynchrones auto-pilotés. Naturellement, les différents types de moyens de contrôle peuvent être librement combinés aux différentes configurations possibles du dispositif de l'invention bien que pour diverses raisons comme le coût ou la robustesse, certaines de ces combinaisons sont particulièrement avantageuses.

Le dispositif de l'invention peut être mise en oeuvre dans le but de compenser les déformations des éléments de la liaison au sol des véhicules actuels et permettre de meilleures performances. C'est à dire que l'on peut employer le dispositif de l'invention pour garantir que le plan de roue reste, en toutes circonstances, sensiblement orthogonal au plan du sol ou légèrement incliné pour tenir compte également de la déformation éventuelle du pneumatique. Ce but est atteint par un dispositif de l'invention dont l'amplitude de carrossage utile est de quelques degrés seulement (par exemple, 8° de part et d'autre de la position moyenne). Mais, le dispositif de l'invention peut également être mise en oeuvre dans le but de permettre une variation bien plus importante du carrossage, c'est à dire permettre un fonctionnement de la liaison au sol plus proche de celui d'une motocyclette que de celui des véhicules à trois roues et plus, actuellement sur le marché.

Dans le but de faciliter la compréhension des figures 6 à 12, chaque élément principal du dispositif est représenté avec une section particulière. Ceci est une aide pour le lecteur et certainement pas une indication de réalisation préférée. Dans la pratique, les différentes pièces peuvent avoir toutes formes compatibles avec les principes cinématiques décrits et les efforts qu'elles sont destinées à transmettre.

D'une façon générale, les figures représentent une roue (2) comportant un bandage pneumatique mais l'invention s'adresse naturellement à tout type de roue avec ou sans bandage élastique, pneumatique ou non pneumatique, une caractéristique essentielle étant la position du premier centre instantané de rotation par rapport à l'aire de contact, quelle qu'elle soit.

## Revendications

1. Dispositif de suspension (1 ; 11) destiné à relier un porte-roue (3) à une caisse (5) d'un véhicule, ledit dispositif comportant des moyens (4, 8, 9) conférant au porte-roue, par rapport à la caisse, un degré de liberté de carrossage et un degré de liberté de débattement de suspension indépendants l'un de l'autre, **caractérisé en ce que** lesdits moyens comprennent un support intermédiaire (4) liant le porte-roue à la caisse, le support intermédiaire étant d'un part articulé par rapport à la caisse selon un premier axe (ASI) sensiblement vertical et d'autre part articulé par rapport au porte-roue selon un deuxième axe (R1R2) de manière à ce qu'une rotation dudit support intermédiaire autour dudit premier axe permette ledit degré de liberté de carrossage.

2. Dispositif de suspension selon la revendication 1, ledit porte-roue étant destiné à porter une roue (2) de rayon 'r', ladite roue étant destinée à reposer au sol (S), ledit dispositif étant configuré de manière à ce que le mouvement de carrossage du porte-roue par rapport à la caisse admette, autour d'une position moyenne, un premier centre instantané de rotation (CIR R/C) situé dans un intervalle allant de 2.5 r au dessus du sol à r en dessous du sol et de préférence de r au dessus du sol à r en dessous du sol.

3. Dispositif selon la revendication 2, ledit premier centre instantané de rotation (CIR R/C) étant situé dans un intervalle allant de 0.2 r au dessus du sol à 0.4 r en dessous du sol.

4. Dispositif selon l'une des revendications 2 ou 3, ladite roue (2) étant destinée à reposer au sol (S) par l'intermédiaire d'une aire de contact (AC), configuré de manière à ce que ledit dispositif soit proche de l'équilibre dans ladite position moyenne en l'absence d'effort transversal (Fy) exercé par le sol sur la roue dans l'aire de contact.

5. Dispositif selon l'une des revendications 2 à 4, le mouvement de carrossage du porte-roue (3) par rapport audit premier axe (ASI) admettant, autour de ladite position moyenne, un deuxième centre instantané de rotation (CIR R/ASI) situé sensiblement dans le plan de la roue (PR).

6. Dispositif selon l'une des revendications 2 à 5, ledit premier centre instantané de rotation (CIR R/C) étant situé sous le plan du sol (S) afin que des efforts transversaux (Fy) exercés par le sol sur la roue (2) dans l'aire de contact (AC) induisent une inclinaison du porte-roue (3) par rapport à la caisse dans le sens d'une diminution de carrossage lorsque lesdits efforts transversaux sont dirigés vers l'intérieur du véhicule et dans le sens d'une augmentation de carrossage lorsque lesdits efforts transversaux sont dirigés vers l'extérieur du véhicule.

7. Dispositif selon l'une des revendications précédentes, le support intermédiaire étant lié au porte-roue de façon à ce que le braquage soit sensiblement indépendant du carrossage.

8. Dispositif selon l'une des revendications précédentes, comportant en outre des moyens (13, 133, 14, 15, 16) de contrôle du braquage.

9. Dispositif selon l'une des revendications précédentes, comportant en outre des moyens de contrôle aptes à influencer le carrossage de la roue.

10. Dispositif selon la revendication 9, les moyens de contrôle comprenant un élément élastiquement déformable s'opposant au mouvement de carrossage.

11. Dispositif selon la revendication 10, l'élément déformable étant constitué par des articulations élastomériques.

12. Dispositif selon la revendication 9, les moyens de contrôle comprenant un moyen de contrôle actif (50).

13. Dispositif selon l'une des revendications précédents dans lequel le support intermédiaire (4) est articulé aux élément de suspension (8, 9) selon le premier axe (ASI), le porte-roue étant articulé sur le support intermédiaire selon le deuxième axe (R1R2).

14. Dispositif (11) selon l'une des revendications 1 à 12, destiné à relier en outre un porte-roue opposé (34') appartenant à un même essieu que le porte-roue (34).

15. Dispositif (11) selon la revendication 14, dans lequel le support intermédiaire (44) est relié par des bras de suspension supérieur (84) et inférieur (94) de manière symétrique au porte-roue (34) et au porte-roue opposé (34').

16. Véhicule équipé du dispositif selon l'une des revendications précédentes.

## Claims

1. Suspension device (1; 11) intended to connect a wheel carrier (3) to a body (5) of a vehicle, the said device having means (4, 8, 9) conferring to the wheel carrier, with respect to the body, a degree of camber freedom and a degree of suspension deflection freedom substantially independent of one another, **characterised in that** the said means comprise an intermediate support (4) linking the wheel carrier to the body, the intermediate support being on the one hand articulated with respect to the body along a substantially vertical first axis (ASI) and on the other hand articulated to the wheel carrier along a second axis (R1R2) so that a rotation of the said intermediate support about the said first axis permits the said degree of camber freedom.

2. Suspension device according to Claim 1, the said wheel carrier being intended to carry a wheel (2) of radius 'r', the said wheel being intended to rest on the ground (S), the said device being configured so that the camber movement of the wheel carrier with respect to the body allows, about a mean position, a first instantaneous centre of rotation (CIR R/C) situated in a range going from 2.5 r above the ground to r below the ground and preferably from r above the ground to r below the ground.

3. Device according to Claim 2, the said first instantaneous centre of rotation (CIR R/C) being situated in a range going from 0.2 r above the ground to 0.4 r below the ground.

4. Device according to one of Claims 2 and 3, the said wheel (2) being intended to rest on the ground (S) by way of a contact area (AC), configured so that the said device is close to the equilibrium in the said mean position in the absence of transverse force (Fy) exerted by the ground on the wheel in the contact area.

5. Device according to one of Claims 2 to 4, the camber movement of the wheel carrier (3) with respect to the said first axis (ASI) allowing, about the said mean position, a second instantaneous centre of rotation (CIR R/ASI) situated substantially in the plane of the wheel (PR).

6. Device according to one of Claims 2 to 5, the said first instantaneous centre of rotation (CIR R/C) being situated below the plane of the ground (S) so that transverse forces (Fy) exerted by the ground on the wheel (2) in the contact area (AC) induce an inclination of the wheel carrier (3) with respect to the body towards decreasing camber when the said transverse forces are directed towards the inside of the vehicle and towards increasing camber when the said transverse forces are directed towards the outside of the vehicle.

7. Device according to one of the preceding claims, the intermediate support being linked to the wheel carrier so that the steering is substantially independent of the camber.

8. Device according to one of the preceding claims, further having means (13, 133, 14, 15, 16) for controlling the steering.

9. Device according to one of the preceding claims, further having control means capable of influencing the camber of the wheel.

10. Device according to Claim 9, the control means comprising an elastically deformable element opposing the camber movements.

11. Device according to Claim 10, the elastically deformable element consisting of elastomeric articulations.

12. Device according to Claim 9, the control means comprising an actuator (50).

13. Device according to one of the preceding claims, in which the intermediate support (4) is articulated to the suspension elements (8, 9) along the first axis (ASI), the wheel carrier being articulated to the intermediate support along the second axis (R1R2).

14. Device (11) according to one of claims 1 to 12, intended to connect in addition an opposite wheel carrier (34') belonging to the same axle as the wheel carrier (34).

15. Device (11) according to claim 14, in which the intermediate support (4) is linked through suspension upper (84) and lower (94) arms in symmetrical manner to the wheel carrier (34) and to the opposite wheel carrier (34').

16. Vehicle equipped with the device according to one of the preceding claims.

## Patentansprüche

1. Aufhängungsvorrichtung (1; 11), die dazu bestimmt ist, einen Radträger (3) mit einer Karosserie (5) eines Fahrzeugs zu verbinden, wobei die Vorrichtung Mittel (4, 8, 9) enthält, die dem Radträger in Bezug auf die Karosserie einen Radsturz-Freiheitsgrad und einen Aufhängungsfederweg-Freiheitsgrad, die voneinander unabhängig sind, verleiht, **dadurch gekennzeichnet, dass** die Mittel einen Zwischenträger (4) enthalten, der den Radträger mit der Karosserie verbindet, wobei der Zwischenträger einerseits in Bezug auf die Karosserie längs einer ersten im Wesentlichen vertikalen Achse (ASI) an der Karosserie angelenkt ist und andererseits in Bezug auf den Radträger längs einer zweiten Achse (R1R2) in der Weise angelenkt ist, dass eine Drehung des Zwischenträgers um die erste Achse den Radsturz-Freiheitsgrad ermöglicht.

2. Aufhängungsvorrichtung nach Anspruch 1, wobei der Radträger dazu bestimmt ist, ein Rad (2) mit Radius "r" zu tragen, wobei das Rad dazu bestimmt ist, auf dem Boden (S) zu stehen, wobei die Vorrichtung in der Weise konfiguriert ist, dass die Radsturzbewegung des Radträgers in Bezug auf die Karosserie um eine Mittelposition ein erstes momentanes Drehzentrum (CIR R/C) zulässt, das sich in einem Intervall von 2,5 r über dem Boden bis r unter dem Boden und vorzugsweise von r über dem Boden bis r unter dem Boden befindet.

3. Vorrichtung nach Anspruch 2, wobei sich das erste momentane Drehzentrum (CIR R/C) in einem Intervall von 0,2 r über dem Boden bis 0,4 r unter dem Boden befindet.

4. Vorrichtung nach einem der Ansprüche 2 oder 3, wobei das Rad (2) dazu bestimmt ist, über eine Aufstandsfläche (AC), die so konfiguriert ist, dass sich die Vorrichtung bei Abwesenheit einer transversalen Kraft (Fy), die in der Aufstandsfläche vom Boden auf das Rad ausgeübt wird, in der Nähe des Gleichgewichts in der mittleren Position befindet, auf dem Boden (S) zu stehen.

5. Vorrichtung nach einem der Ansprüche 2 bis 4, wobei die Radsturzbewegung des Radträgers (3) in Bezug auf die erste Achse (ASI) um die mittlere Position ein zweites momentanes Drehzentrum (CIR R/ASI) herbeiführt, das sich im Wesentlichen in der Ebene des Rades (PR) befindet.

6. Vorrichtung nach einem der Ansprüche 2 bis 5, wobei sich das erste momentane Drehzentrum (CIR R/C) unterhalb der Ebene des Bodens (S) befindet, damit die transversalen Kräfte (Fy), die in der Aufstandsfläche (AC) vom Boden auf das Rad (2) ausgeübt werden, eine Neigung des Radträgers (3) in Bezug auf die Karosserie in Richtung einer Verringerung des Radsturzes, wenn die transversalen Kräfte in das Fahrzeuginnere gerichtet sind, und in Richtung einer Erhöhung des Radsturzes, wenn die transversalen Kräfte in die äußere Umgebung des Fahrzeugs gerichtet sind, herbeiführen.

7. Vorrichtung nach einem der vorhergehenden Ansprüche, wobei der Zwischenträger mit dem Radträger in der Weise verbunden ist, dass der Lenkeinschlag von dem Radsturz im Wesentlichen unabhängig ist.

8. Vorrichtung nach einem der vorhergehenden Ansprüche, die außerdem Mittel (13, 133, 14, 15, 16) für die Steuerung des Lenkeinschlags enthält.

9. Vorrichtung nach einem der vorhergehenden Ansprüche, die außerdem Steuermittel enthält, die den Radsturz des Rades beeinflussen können.

10. Vorrichtung nach Anspruch 9, wobei die Steuermittel ein elastisch verformbares Element enthalten, das der Radsturzbewegung entgegenwirkt.

11. Vorrichtung nach Anspruch 10, wobei das verformbare Element durch Elastomergelenke gebildet ist.

12. Vorrichtung nach Anspruch 9, wobei die Steuermittel ein aktives Steuermittel (50) enthalten.

13. Vorrichtung nach einem der vorhergehenden Ansprüche, in der der Zwischenträger (4) an den Aufhängungselementen (8, 9) längs der ersten Achse (ASI) angelenkt ist, wobei der Radträger an dem Zwischenträger längs der zweiten Achse (R1R2) angelenkt ist.

14. Vorrichtung (11) nach einem der Ansprüche 1 bis 12, die dazu bestimmt ist, außerdem einen gegenüberliegenden Radträger (34'), der zur selben Achse wie der Radträger (34) gehört, zu verbinden.

15. Vorrichtung (11) nach Anspruch 14, in der der Zwischenträger (44) über obere Aufhängungslenker (84) und untere Aufhängungslenker (94) symmetrisch mit dem Radträger (34) und mit dem gegenüberliegenden Radträger (34') verbunden ist.

16. Fahrzeug, das mit der Vorrichtung nach einem der vorhergehenden Ansprüche ausgerüstet ist.
